# EUROPEAN PATENT APPLICATION

(11) **EP 4 368 961 A1**
(43) Date of publication of application: **15.05.2024**
(21) Application number: 22837370.0
(22) Date of filing: 02.06.2022
(51) Int. Cl.: G01N 1/28

(54) **SLIDE GLASS CARRIER**

(30) Priority: 06.07.2021 JP 2021111914
(71) Applicant: HITACHI HIGH-TECH CORPORATION, Tokyo 105-6409 (JP)
(72) Inventor: SEKINE, Ryota, Tokyo 105-6409 (JP); SUGIYAMA, Hidetoshi, Tokyo 105-6409 (JP); ENDO, Masashi, Tokyo 105-6409 (JP)
(74) Representative: Strehl Schübel-Hopf & Partner
(86) International application number: PCT/JP2022/022547
(87) International publication number: WO 2023/281951

(57) **Abstract**

In a technique for transporting a glass slide, particularly, a glass slide transport device that can transport a glass slide while holding a liquid placed on the glass slide is provided with a simple configuration. The glass slide transport device includes a gripping portion that can grip and release the glass slide, and a drive unit that can move the gripping portion. Here, the gripping portion includes at least three or more finger portions 3 and a finger drive unit that can operate the plurality of finger portions 3. Each of the plurality of finger portions 3 includes a support portion 4 that can support a part of a lower surface of the glass slide 30, and a pointed head portion 5 that can come into contact with a gripping point 30a. The gripping point 30a is provided on a side surface of the glass slide 30 at a position below an upper surface of the glass slide 30.

## Description

### Technical Field

The present invention relates to a glass slide transport device, and for example, relates to a technique effectively applied to a glass slide transport device that transports a glass slide on which a liquid is placed.

### Background Art

In a pathological examination, when a biological sample such as tissue or blood is placed on a glass slide and is processed, the examination is performed by preparing a glass slide for microscopic observation and performing the microscopic observation. In recent years, automatic devices have been developed in steps typified by a tissue staining step, a cover slip enclosing step for a glass slide after the staining, a digital image acquisition step for a glass slide after the staining, and the like. Here, in a device or a system including a plurality of devices that do not need to be manually operated, a glass slide transport device that transports a glass slide in the device or between the devices is required. Such a glass slide transport device requires a function of lifting and transporting the glass slide from a placement position where the glass slide is placed, and a function of transporting the glass slide for each placement position where the glass slide is placed.

JP2017-015978A (PTL 1) describes a technique of transporting a glass slide by holding a ridge line of the glass slide with a holding portion having a V-shaped cross section with respect to a surface perpendicular to a glass slide placement surface.

JP2009-264793A (PTL 2) describes a technique in which a glass slide entirely immersed in a protective liquid is taken out and transported to a storage container.

JP2007-65180A (PTL 3) describes a technique for accurately fixing a glass slide in a position-determined state.

### Citation List

### Patent Literature

PTL 1: JP2017-015978A
PTL 2: JP2009-264793A
PTL 3: JP2007-65180A

### Summary of Invention

### Technical Problem

For example, in a staining device, a reagent is dropped onto a glass slide on which a sample is placed, and the sample reacts with the reagent. Therefore, when transporting the glass slide on which the reagent is dropped, it is necessary to assume that the glass slide on which a liquid is placed is transported. In this case, a technique of transporting the glass slide while holding the liquid is desired.

In this regard, the techniques described in PTLs 1 to 3 do not assume that a glass slide on which a liquid is placed is transported. That is, since the techniques described in PTLs 1 to 3 are not techniques focusing on the viewpoint of implementing the technique of transporting the glass slide while holding the liquid, there is no description or suggestion that serves as motivation for implementing a transport technique for transporting the glass slide while holding the liquid.

An object of the present invention is to particularly provide, with a simple configuration, a glass slide transport device that can transport a glass slide while holding a liquid even if the liquid is placed on the glass slide in a technique of transporting a glass slide.

### Solution to Problem

A glass slide transport device according to an embodiment includes a gripping portion that can grip and release a glass slide, and a drive unit that can move the gripping portion. Here, the gripping portion includes at least three or more finger portions and a finger drive unit that can operate the plurality of finger portions. Each of the plurality of finger portions includes a support portion that can support a part of a lower surface of the glass slide, and a pointed head portion that can come into contact with a gripping point. The gripping point is provided on a side surface of the glass slide at a position below an upper surface of the glass slide.

### Advantageous Effects of Invention

According to an embodiment, in a technique for transporting a glass slide, a glass slide transport device that can transport a glass slide while holding a liquid placed on the glass slide can be particularly provided with a simple configuration.

### Brief Description of Drawings

[FIG. 1] FIG. 1 is a plan view illustrating a schematic configuration of a sample processing system.
[FIG. 2] FIG. 2 is a schematic front view of the sample processing system.
[FIG. 3] FIG. 3 is a view schematically illustrating a configuration of a glass slide transport device.
[FIG. 4] FIG. 4 is a schematic view of a finger portion of the glass slide transport device.
[FIG. 5] FIG. 5 is a view illustrating a gripping portion in a state in which a glass slide is gripped by the finger portion.
[FIG. 6] FIG. 6 is a top view of the gripping portion by which the glass slide is gripped.
[FIG. 7] FIG. 7 is a front view mainly illustrating a configuration of a finger portion according to Modification 1.
[FIG. 8] FIG. 8 is a top view mainly illustrating a configuration of the finger portion according to Modification 1.
[FIG. 9] FIG. 9 is a front view mainly illustrating a configuration of a finger portion according to Modification 2 .
[FIG. 10] FIG. 10 is a top view mainly illustrating a configuration of the finger portion according to Modification 2.
[FIG. 11] FIG. 11 is a top view illustrating a configuration of a stage on which a glass slide is placed.
[FIG. 12] FIG. 12 is a front view illustrating a configuration of the stage.
[FIG. 13] FIG. 13 is a diagram illustrating a positional relationship between a glass slide placed on a positioning pin base and a positioning pin fixed to the positioning pin base.
[FIG. 14] FIG. 14 is a top view illustrating the configuration of the stage on which the glass slide is placed.
[FIG. 15] FIG. 15 is a front view illustrating the configuration of the stage.
[FIG. 16] FIG. 16 is a view illustrating a positional relationship between the glass slide placed on a positioning pin base and a positioning pin fixed to the positioning pin base.
[FIG. 17] FIG. 17 is a view illustrating a gripping operation.
[FIG. 18] FIG. 18 is a view illustrating the gripping operation.
[FIG. 19] FIG. 19 is a view illustrating the gripping operation.
[FIG. 20] FIG. 20 is a view illustrating the gripping operation.
[FIG. 21] FIG. 21 is a view illustrating the gripping operation.
[FIG. 22] FIG. 22 is a flowchart illustrating a flow of the gripping operation.
[FIG. 23] FIG. 23 is a flowchart illustrating a flow of a placement operation.
[FIG. 24] FIG. 24 is a diagram illustrating a configuration of a glass slide transport device and a stage in Modification 3.

### Description of Embodiments

In the drawings for illustrating the embodiments, the same members are denoted by the same reference signs in principle, and repeated description thereof is omitted. To facilitate understanding of the drawings, hatching may be applied to a plan view.

### <Sample Processing System>

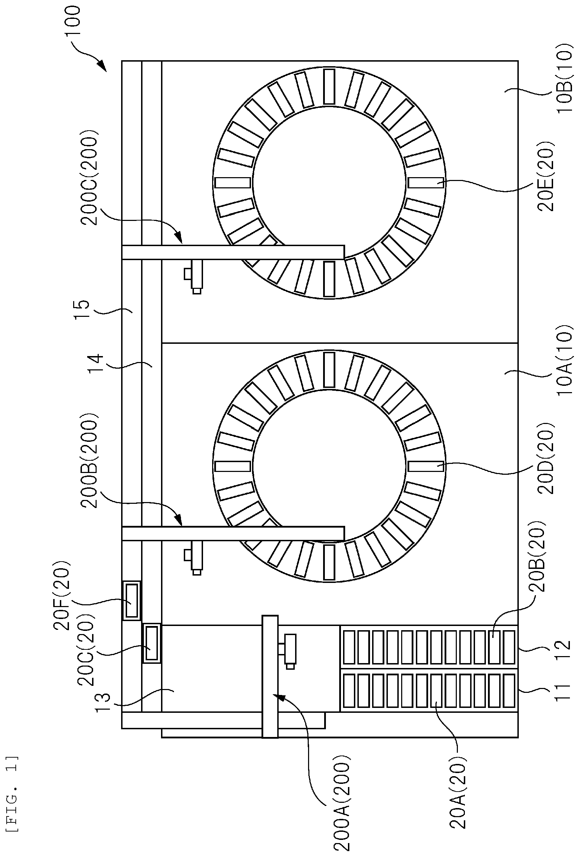

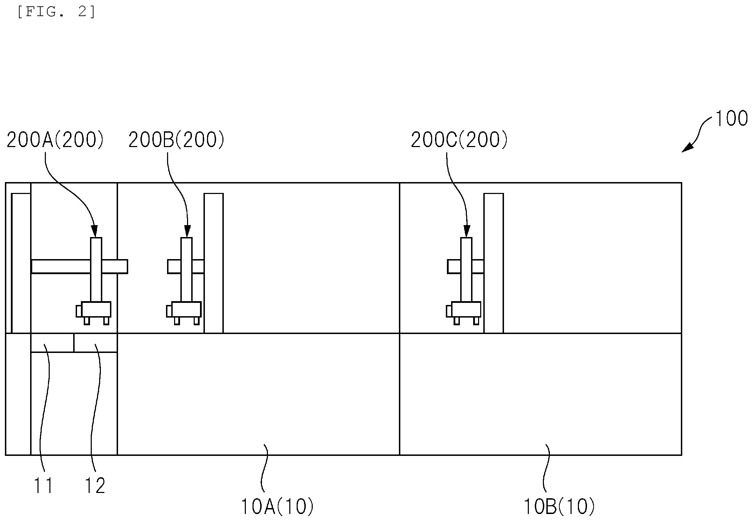

FIG. 1 is a plan view illustrating a schematic configuration of a sample processing system 100 including glass slide transport devices 200, and FIG. 2 is a schematic front view of the sample processing system 100.

The sample processing system 100 includes staining units 10, a glass slide loading unit 11, a glass slide storage unit 12, a sampler unit 13, a glass slide loading line 14, a glass slide storage line 15, and the glass slide transport devices 200.

The staining units 10 have a function of staining a sample placed on a glass slide, and FIGS. 1 and 2 illustrate a staining unit 10A and a staining unit 10B as the staining units 10 provided in the sample processing system 100.

A glass slide on which a sample to be stained is placed is placed in the glass slide loading unit 11. A glass slide on which a sample stained by the staining unit 10 is placed is housed in the glass slide storage unit 12. Here, the sampler unit 13 is configured as a unit including the glass slide loading unit 11 and the glass slide storage unit 12.

The glass slide loading line 14 is used to transport the glass slide on which a sample to be stained is placed from the glass slide loading unit 11 to the staining unit 10. On the other hand, the glass slide storage line 15 is used to transport the glass slide on which a stained sample is placed from the staining unit 10 to the glass slide storage unit 12.

Each of the sampler unit 13 and the staining unit 10 is provided with the glass slide transport device 200. Specifically, the sampler unit 13 is provided with a glass slide transport device 200A. On the other hand, the staining unit 10A is provided with a glass slide transport device 200B, and the staining unit 10B is provided with a glass slide transport device 200C.

Further, each of the staining unit 10, the glass slide loading unit 11, the glass slide storage unit 12, the glass slide loading line 14, and the glass slide storage line 15 is provided with a stage 20 for placing a glass slide. The "stage 20" is a generic name of places where glass slides are placed, and includes a tray on which the glass slide is to be placed, a carrier on which the glass slide is placed and which moves in the device, and a table on which the glass slide is placed and a preprocess such as deparaffinization and a staining process. Specifically, the glass slide loading unit 11 is provided with a plurality of stages 20A, and the glass slide storage unit 12 is provided with a plurality of stages 20B. The glass slide loading line 14 is provided with a stage 20C. On the other hand, the staining unit 10A is provided with a plurality of stages 20D, and the staining unit 10B is provided with a plurality of stages 20E. Further, the glass slide storage line 15 is provided with a stage 20F. The sample processing system 100 is configured in this way.

Next, an operation of the sample processing system 100 will be briefly described.

In FIG. 1, first, the glass slide transport device 200A is used to move a glass slide placed on the stage 20A provided in the glass slide loading unit 11 to the stage 20C provided in the glass slide loading line 14. At this time, a sample to be stained is placed on the transported glass slide.

Next, in glass slide loading line 14, the stage 20C on which the glass slide is placed is moved to be carried into the staining unit 10A or the staining unit 10B. Then, for example, when the glass slide is to be carried into the staining unit 10A, the glass slide transport device 200B is used to move the glass slide from the stage 20C to the stage 20D in the staining unit 10A. On the other hand, when the glass slide is to be carried into the staining unit 10B, the glass slide transport device 200C is used to move the glass slide from the stage 20C to the stage 20E in the staining unit 10B.

When the glass slide has been carried into the staining unit 10A, the staining process is performed on the sample on the glass slide placed on the stage 20D in the staining unit 10A.

In contrast, when the glass slide has been carried into the staining unit 10B, the staining process is performed on the sample on the glass slide placed on the stage 20E in the staining unit 10B. Thereafter, for example, the glass slide on which the sample subjected to the staining process in the staining unit 10A is placed is moved from the stage 20D to the stage 20F provided in the glass slide storage line 15 by the glass slide transport device 200B. On the other hand, the glass slide on which the sample subjected to the staining process in the staining unit 10B is placed is moved from the stage 20E to the stage 20F provided in the glass slide storage line 15 by the glass slide transport device 200C.

Then, in the glass slide storage line 15, the stage 20F on which the glass slide is placed is moved to be carried into glass slide storage unit 12. Thereafter, the glass slide transport device 200A is used to move the glass slide from the stage 20F to the stage 20B provided in the glass slide storage unit 12.

In this way, according to the sample processing system 100, the staining process is performed in the staining unit 10A or the staining unit 10B on the sample placed on the glass slide taken out from the glass slide loading unit 11, and then an operation of storage the glass slide on which the sample subjected to the staining process is placed in the glass slide storage unit 12 can be performed.

A configuration example in which the sample processing system 100 illustrated in FIG. 1 includes the staining unit 10A and the staining unit 10B is mentioned, and the invention is not limited to this example. For example, the sample processing system 100 may include a cover slip mounting unit, a glass slide imaging unit, or the like in addition to the staining unit 10A and the staining unit 10B.

### <Glass Slide Transport Device>

Next, a configuration of the glass slide transport device 200 will be described.

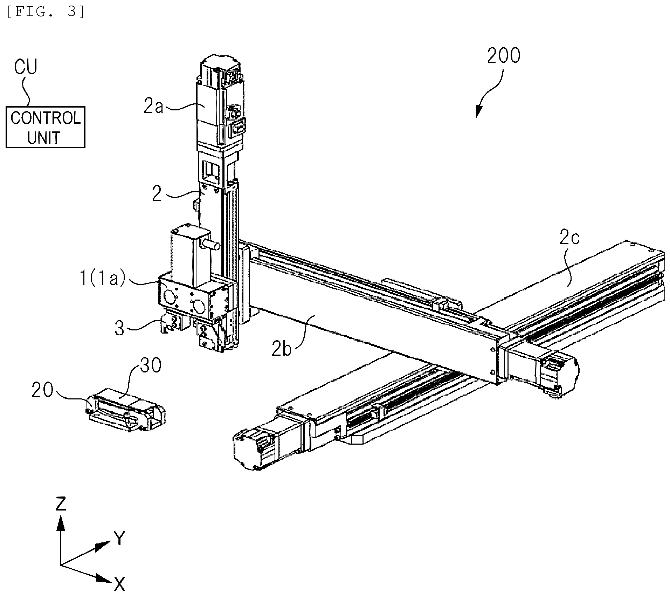

FIG. 3 is a view schematically illustrating the configuration of the glass slide transport device 200.

In FIG. 3, the glass slide transport device 200 includes a gripping portion 1 for gripping a glass slide, a drive unit 2, and a control unit CU, and the glass slide 30 is placed on the stage 20. The stage 20 illustrated in FIG. 3 is, for example, a stage provided in the glass slide loading unit 11, the glass slide storage unit 12, a staining process unit of the staining unit 10, the glass slide loading line 14, and the glass slide storage line 15 illustrated in FIG. 1.

In the present embodiment, the drive unit 2 is implemented to move the gripping portion 1 in a horizontal direction and an up-down direction using a Z transport shaft 2a, an X transport shaft 2b, and a Y transport shaft 2c, and a movement operation of the gripping portion 1 caused by the drive unit 2 is controlled by the control unit CU.

The gripping portion 1 includes at least three or more finger portions 3 for gripping the glass slide 30, and a finger drive unit 1a that can operate the finger portions 3. An operation of gripping or releasing the glass slide 30 is performed by performing an operation of opening and closing the finger portions 3 by using the finger drive unit 1a. At this time, the operation of opening and closing the finger portions 3 by the finger drive unit 1a is controlled by the control unit CU.

At least three or more finger portions 3 are disposed to hold two side surfaces, facing each other, of the glass slide 30 while keeping the glass slide 30 horizontal. For example, in the present embodiment, two finger portions 3 are disposed on one side surface, and the glass slide 30 is gripped by a total of four finger portions 3.

### <Configuration of Finger Portion>

Next, a configuration of the finger portion 3 will be described.

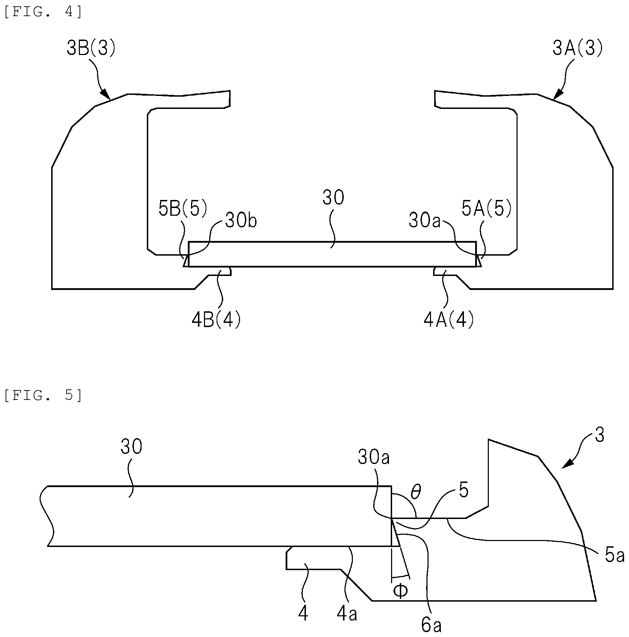

FIG. 4 is a diagram schematically illustrating a configuration in which the glass slide 30 is held by a finger portion 3A and a finger portion 3B. In FIG. 4, the finger portion 3A includes a support portion 4A that can support a part of a lower surface of the glass slide 30, and a pointed head portion 5 that can come into contact with a gripping point 30a which is provided on one side surface (right side surface in FIG. 4) of the glass slide 30 at a position below an upper surface of the glass slide 30. Similarly, the finger portion 3B includes a support portion 4B that can support a part of the lower surface of the glass slide 30, and a pointed head portion 5 that can come into contact with a gripping point 30b which is provided on the other side surface (left side surface in FIG. 4) of the glass slide 30 at a position below the upper surface of the glass slide 30. The glass slide 30 is held by the finger portion 3A and the finger portion 3B as a pair configured as described above. Specifically, the glass slide 30 is gripped by the pointed head portion 5A and the pointed head portion 5B while being supported by the support portion 4A and the support portion 4B.

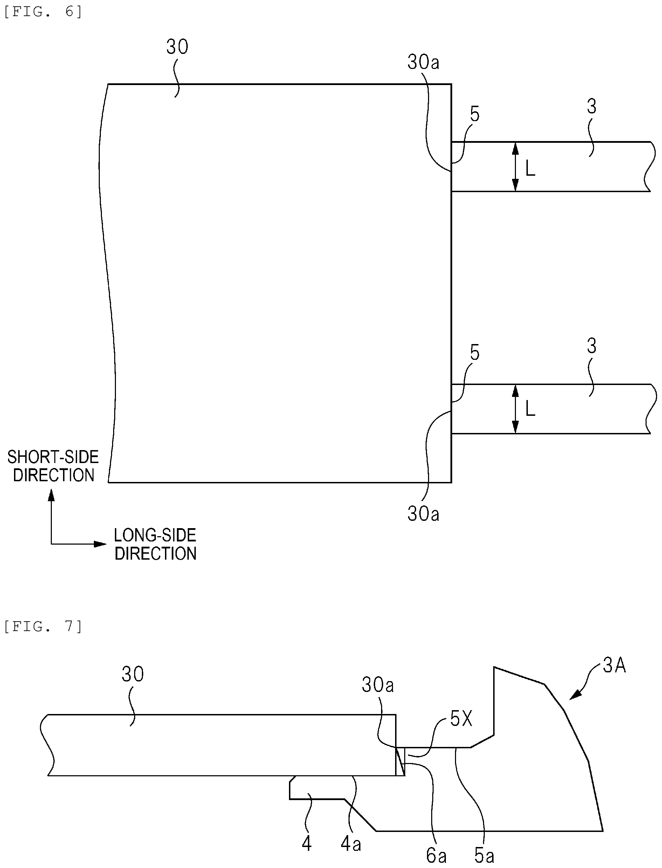

FIG. 5 is a front view illustrating a gripping portion in a state in which the glass slide 30 is gripped by the finger portion 3. FIG. 6 is a top view of the gripping portion by which the glass slide 30 is gripped.

As illustrated in FIG. 5, the finger portion 3 includes a support portion 4 that can support a part of the lower surface of the glass slide 30, and a pointed head portion 5 that can come into contact with the gripping point 30a which is provided on the side surface of the glass slide 30 at a position below the upper surface of the glass slide 30. Here, a thickness of the glass slide 30 is, for example, 1.0 mm or more and 1.1 mm or less, and the gripping point 30a is located at a distance of 0.5 mm or more away from the upper surface of glass slide 30.

In FIG. 5, the finger portion 3 further includes a first surface 6a that connects a support surface 4a of the support portion 4 and the pointed head portion 5, and a second surface 5a that includes the pointed head portion 5 and intersects the first surface 6a. As illustrated in FIG. 5, the pointed head portion 5 is configured such that, when an angle formed by the side surface of the glass slide 30 and the second surface 5a is defined as "θ", the angel θ is 90 degrees or more. Further, as illustrated in FIG. 5, the finger portion 3 is configured such that, when an angle formed by the side surface of the glass slide 30 and the first surface 6a is defined as "Φ", the angle Φ is 10 degrees or more.

In FIG. 6, the finger portion 3 is configured such that, when a short-side direction of the glass slide 30 is defined as a width direction, a length "L" of the pointed head portion 5 in the width direction is 2.0 mm or less. That is, the length "L" of the pointed head portion 5 in contact with the side surface of the glass slide 30 is 2.0 mm or less. The finger portion 3 is configured as described above.

### <Features of Finger Portion>

Next, feature points of the finger portion 3 will be described.

A first feature point of the finger portion 3 is that, for example, the finger portion 3 includes the pointed head portion 5 that comes into contact with the gripping point 30a which is provided on the side surface of the glass slide 30 as illustrated in FIG. 5 at a position below the upper surface of the glass slide 30. Accordingly, contact between a liquid present on the upper surface of the glass slide 30 and the finger portion 3 can be prevented. As a result, according to the present embodiment, when the glass slide 30 is gripped by the finger portion 3, the liquid on the glass slide 30 can be prevented from flowing out through the contact with the finger portion 3. That is, in the present embodiment, it is important that the finger portion 3 is configured such that the pointed head portion 5 comes into contact with the gripping point 30a which is provided on the side surface at a position below the upper surface. This is because, when the pointed head portion 5 comes into contact with the upper surface, there is a high possibility that the liquid on the upper surface of the glass slide 30 comes into contact with the pointed head portion 5, and in this case, the liquid is likely to flow out from the upper surface of the glass slide 30 through the contact of the liquid with the pointed head portion 5.

In particular, the first feature point of the finger portion 3 according to the present embodiment is effective when the glass slide is transported from the staining unit 10 to the glass slide storage unit 12. This is because, in the staining unit 10, a liquid (reagent) is dropped on the glass slide by the staining process, and then, the glass slide on which the liquid is placed is gripped by the glass slide transport device 200 and transported from the staining unit 10 to the glass slide storage unit 12. That is, not only it is assumed that a staining reagent for staining a tissue or a cell or a buffer solution used for cleaning is placed on the glass slide 30 on which a sample subjected to the staining process in the staining unit 10 is placed, but also it is also assumed that an evaporation prevention oil is placed on the glass slide 30 in order to prevent the tissue or the cell after staining from being dried and to perform humidification. Therefore, it can be seen that the first feature point in the present embodiment is very effective particularly in that the liquid on glass slide 30 is prevented from flowing out through the contact with the finger portion 3 when the glass slide is transported from the staining unit 10 to the glass slide storage unit 12.

Here, from the viewpoint of preventing the liquid placed on the glass slide 30 from flowing out when the glass slide 30 is gripped by the finger portion 3, it is desirable that the angle θ formed by the side surface of the glass slide 30 and the second surface 5a is 90 degrees or more as illustrated in FIG. 5 in addition to the first feature point of the finger portion 3 described above. This is because, when the angle θ between the side surface of the glass slide 30 and the second surface 5a is 90 degrees or more, a distance between the upper surface of the glass slide 30 and the second surface 5a is increased, and as a result, the probability that the liquid placed on the upper surface of the glass slide 30 comes into contact with the second surface 5a can be reduced when the glass slide 30 is gripped by the finger portion 3.

Next, a second feature point of the finger portion 3 is that, for example, the angle Φ formed by the side surface of the glass slide 30 and the first surface 6a is 10 degrees or more as illustrated in FIG. 5. Accordingly, according to the finger portion 3 according to the present embodiment, when the glass slide 30 is gripped by the finger portion 3, a liquid adhering to the side surface or the lower surface of the glass slide 30 can be prevented from flowing around to the upper surface of the glass slide 30 and the reagent placed on the upper surface of the glass slide 30 can be prevented from flowing out.

This point will be described below.

For example, in the staining unit 10, the drop of the reagent and cleaning by discharging the buffer solution are performed on the sample placed on the glass slide 30. Therefore, the buffer solution adheres to the side surface and the lower surface of the glass slide 30 after cleaning. Therefore, for example, in FIG. 5, when the angle formed by the side surface of the glass slide 30 and the first surface 6a is 0 degree, that is, when the side surface of the glass slide 30 and the first surface 6a are in contact with each other, the buffer solution adhering to the side surface or the lower surface of the glass slide 30 flows around to the upper surface of the glass slide 30 due to a capillary phenomenon caused by a contact surface between the side surface and the first surface 6a. As a result, when the glass slide 30 is gripped by the finger portion 3, the buffer solution adhering to the side surface or the lower surface of the glass slide 30 may flow around to the upper surface of the glass slide 30, and the reagent on the upper surface of the glass slide 30 may flow out.

In the present embodiment, the angle Φ between the side surface of the glass slide 30 and the first surface 6a is set to 10 degrees or more. In this case, as illustrated in FIG. 5, the capillary phenomenon is prevented by a gap interposed between the side surface of the glass slide 30 and the first surface 6a. Therefore, according to the second feature point of the finger portion 3 in the present embodiment, when the glass slide 30 is gripped by the finger portion 3, the buffer solution adhering to the side surface and the lower surface of the glass slide 30 can be effectively prevented from flowing around to the upper surface of the glass slide 30 and the reagent placed on the upper surface of the glass slide 30 can be effectively prevented from flowing out.

Furthermore, from the viewpoint of preventing the capillary phenomenon, it is effective to reduce a contact area between the glass slide 30 and the finger portion 3. Therefore, for example, as illustrated in FIG. 6, it is desirable that the length "L" of the pointed head portion 5 of the finger portion 3 that comes into contact with the side surface of the glass slide 30 is small. Specifically, the finger portion 3 is preferably configured such that the length "L" of the pointed head portion 5 in the width direction is 2.0 mm or less. Here, the "width direction" is defined as a horizontal direction parallel to the side surface of the glass slide 30 including the gripping point.

### <Modification 1>

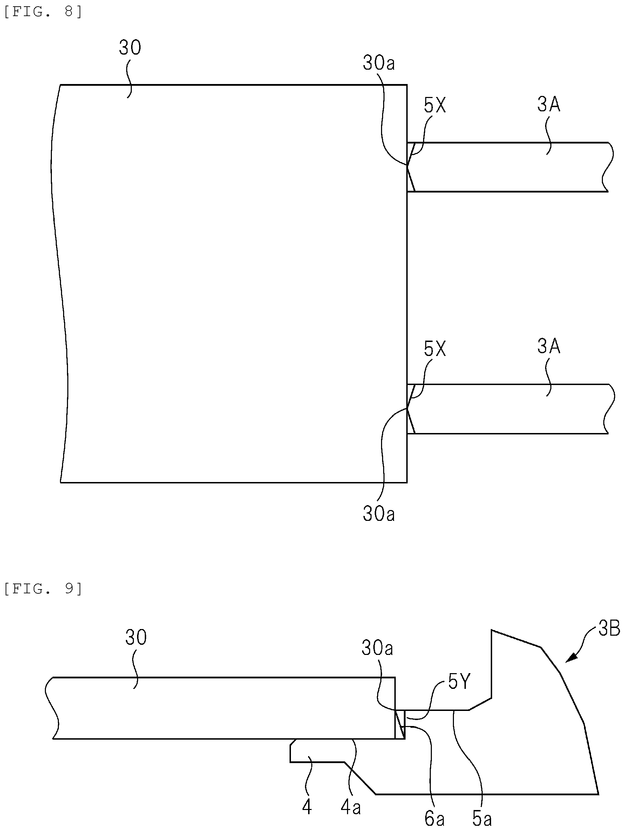

FIG. 7 is a front view mainly illustrating a configuration of the finger portion 3A according to Modification 1. FIG. 8 is a top view mainly illustrating a configuration of the finger portion 3A according to Modification 1.

As illustrated in FIGS. 7 and 8, the pointed head portion 5X in Modification 1 has a shape that is not in line contact with the side surface of the glass slide 30 but in point contact with the side surface of the glass slide 30. In this case, since the contact area between the side surface of the glass slide 30 and the finger portion 3 can be reduced, the capillary phenomenon can be further prevented. That is, the buffer solution adhering to the side surface or the back surface of the glass slide 30 can be further prevented from flowing around to the upper surface of the glass slide 30 due to the capillary phenomenon, and therefore, the reagent placed on the upper surface of the glass slide 30 can be effectively prevented from flowing out.

### <Modification 2>

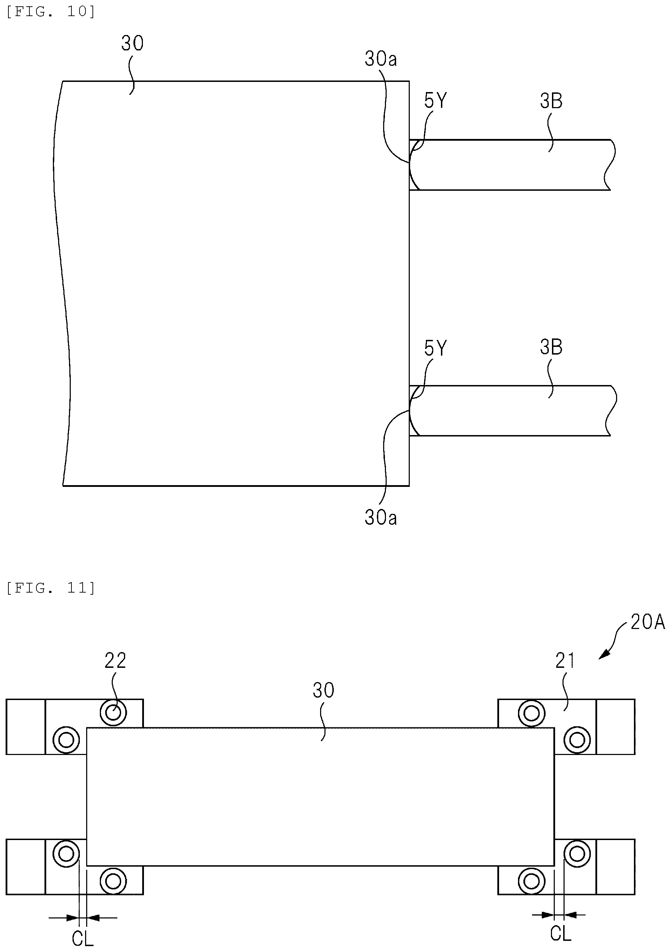

FIG. 9 is a front view mainly illustrating a configuration of the finger portion 3B according to Modification 2. FIG. 10 is a top view mainly illustrating a configuration of the finger portion 3B according to Modification 2.

As illustrated in FIGS. 9 and 10, a pointed head portion 5Y in Modification 2 has a shape that is not in linear contact with the side surface of the glass slide 30 but in curved contact with the side surface of the glass slide 30. In this case, the contact area between the side surface of the glass slide 30 and the finger portion 3 can also be reduced, and therefore, the capillary phenomenon can be further prevented. That is, the buffer solution adhering to the side surface or the back surface of the glass slide 30 can be further prevented from flowing around to the upper surface of the glass slide 30 due to the capillary phenomenon, and therefore, the reagent placed on the upper surface of the glass slide 30 can be effectively prevented from flowing out.

### <Configuration of Stage>

Next, a configuration of the stage 20 will be described.

For example, as illustrated in FIG. 1, the stages 20 are disposed in the staining units 10, the glass slide loading unit 11, the glass slide storage unit 12, the glass slide loading line 14, and the glass slide storage line 15. Here, the configurations of the stages 20 differ depending on the unit (part) where the stages 20 are disposed. Specifically, in the staining units 10, a temperature adjusting function of heating the reagent placed on the glass slide is required, and thus the stage 20D and the stage 20E each are provided with a heater block. On the other hand, the stage 20A, the stage 20B, the stage 20C, and the stage 20F disposed in units (parts) other than the staining units 10 are not provided with a heater block unless a temperature adjusting function is particularly required.

Hereinafter, first, a configuration of the stage 20A not including the heater block will be described.

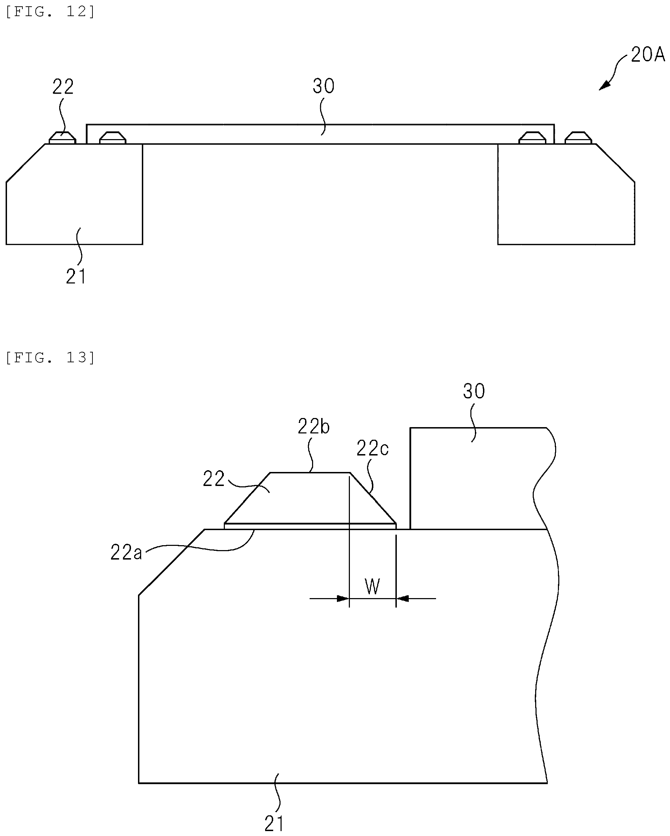

FIG. 11 is a top view illustrating the configuration of the stage 20A on which the glass slide 30 is placed. FIG. 12 is a front view illustrating the configuration of the stage 20A.

In FIGS. 11 and 12, the stage 20A includes a plurality of positioning pin bases 21 and a plurality of positioning pins 22.

The positioning pin base 21 has a function of fixing the positioning pin 22. On the other hand, the positioning pin 22 has a function of holding the glass slide 30 at a predetermined place.

The positioning pin 22 is fixed on each of the positioning pin bases 21 so as to surround four vertices of the lower surface of the glass slide 30. Then, the glass slide 30 is placed on the positioning pin bases 21. Here, a total clearance including the left and right clearances CL illustrated in FIG. 11 is 1.4 mm. For example, when one of the left and right clearances CL is 1.4 mm, the other clearance is 0 mm. Therefore, for example, a lateral distance between a distal end of the support portion 4 and a vertex of the pointed head portion 5 illustrated in FIG. 5 is larger than 1.4 mm. Specifically, the lateral distance between the distal end of the support portion 4 and the vertex of the pointed head portion 5 illustrated in FIG. 5 is 2.0 mm.

The lateral clearance CL in FIG. 11 has been described above, and a dimension of a vertical clearance in FIG. 11 is the same as a dimension of the lateral clearance.

With this setting, even if the glass slide 30 is placed at any position in a region surrounded by the plurality of positioning pins 22, a bottom surface of the glass slide 30 can be supported by the support portion 4 of the finger portion 3.

FIG. 13 is a diagram illustrating a positional relationship between the glass slide 30 placed on the positioning pin base 21 and the positioning pin 22 fixed to the positioning pin base 21.

In FIG. 13, the positioning pin 22 includes a bottom surface 22a, a top surface 22b facing the bottom surface 22a, and a side surface 22c intersecting the bottom surface 22a and the top surface 22b.

Here, the top surface 22b of the positioning pin 22 is set at a position lower than the upper surface of the glass slide 30 placed on the positioning pin base 21 by 0.5 mm or more. That is, a vertical distance from the upper surface of the glass slide 30 to the top surface 22b of the positioning pin 22 is 0.5 mm or more. The side surface 22c of the positioning pin 22 is a sloped surface, and an angle between the bottom surface 22a and the side surface 22c is 30 degrees or more and 60 degrees or less. In this way, the positioning pin 22 according to the present embodiment is configured.

Next, a configuration of the stage 20D including a heater block will be described.

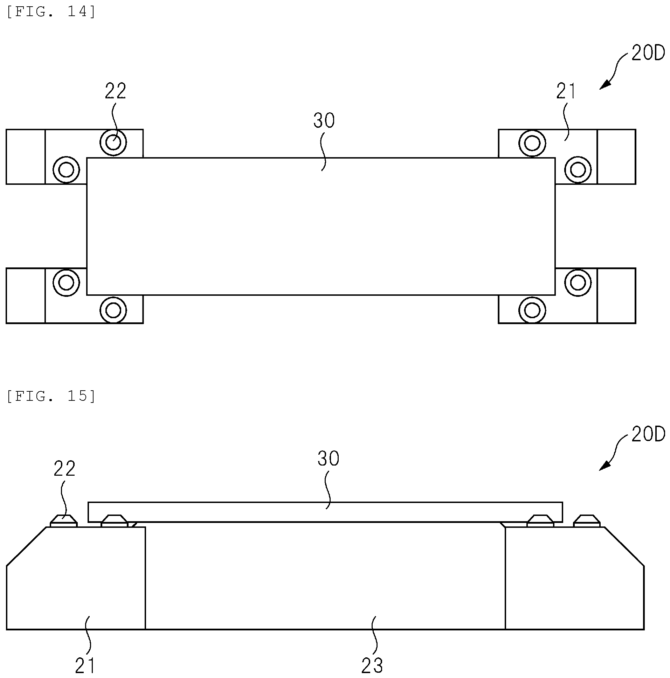

FIG. 14 is a top view illustrating a configuration of the stage 20D on which the glass slide 30 is placed. FIG. 15 is a front view illustrating the configuration of the stage 20D.

The heater block is provided in the stage 20D, on which the glass slide is placed, for a staining process in the staining unit 10A. As illustrated in FIGS. 14 and 15, the stage 20D includes a plurality of positioning pin bases 21, a plurality of positioning pins 22, and a heater block 23. The arrangement of the positioning pins 22 herein is the same as that in FIG. 11.

As illustrated in FIG. 15, the glass slide 30 is placed on the heater block 23. Accordingly, the temperature adjustment of the sample or the reagent placed on the glass slide 30 can be adjusted by controlling on/off of the heater block 23.

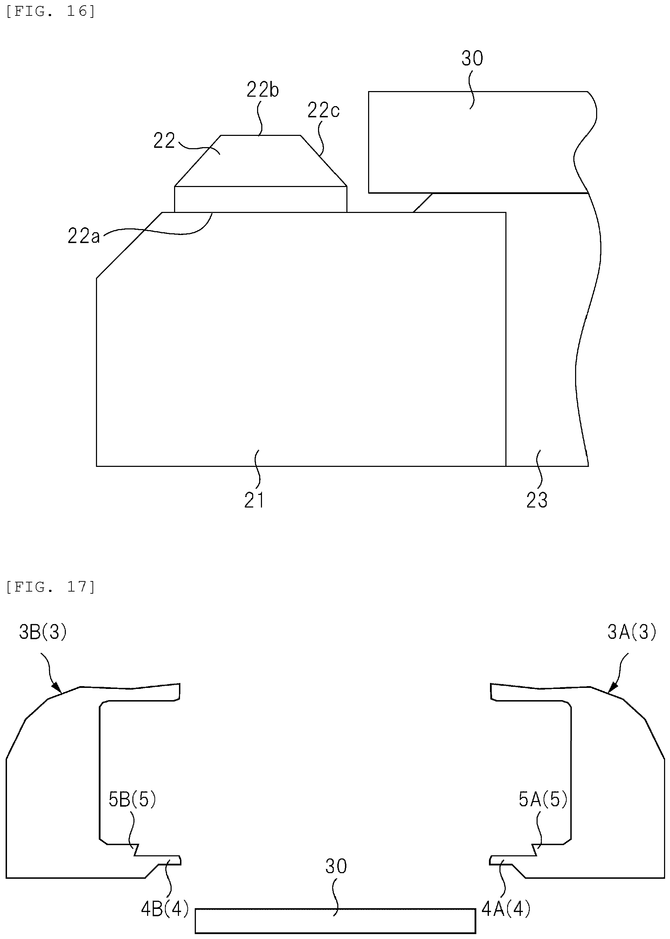

FIG. 16 is a diagram illustrating a positional relationship between the glass slide 30 placed on the positioning pin base 21 and the positioning pin 22 fixed to the positioning pin base 21. The positional relationship between the top surface 22b of the positioning pin 22 and the upper surface of the glass slide 30 illustrated in FIG. 16 and the configuration of the side surface of the positioning pin 22 as a sloped surface are the same as those illustrated in FIG. 13.

### <Features of Positioning Pin>

Next, feature points of the positioning pin 22 will be described.

A first feature point of the positioning pin 22 in the present embodiment is that, for example, a vertical distance (distance in the height direction) from the upper surface of the glass slide 30 to the top surface 22b of the positioning pin 22 is 0.5 mm or more in FIGS. 13 and 16. Accordingly, according to the first feature point of the present embodiment, the reagent placed on the glass slide 30 can be prevented from coming into direct contact with the positioning pin 22. According to the first feature point of the present embodiment, due to the contact between the side surface of the glass slide 30 and the positioning pin 22, the liquid adhering to the side surface of the glass slide 30 flows around to the upper surface of the glass slide 30 by the capillary phenomenon and comes into contact with the reagent placed on the upper surface of the glass slide 30, so that the reagent placed on the upper surface of the glass slide 30 can be prevented from flowing out.

Next, a second feature point of the positioning pin 22 in the present embodiment is that the side surface of the positioning pin 22 is a sloped surface, and the angle between the bottom surface 22a and the side surface 22c is 30 degrees or more and 60 degrees or less. Accordingly, first, since the side surface of the positioning pin 22 is a sloped surface, the reagent placed on the upper surface of the glass slide 30 is less likely to come into contact with the positioning pin 22, and the outflow of the reagent can be prevented. Then, by setting the angle between the bottom surface 22a and the side surface 22c to 30 degrees or more, the glass slide 30 is prevented from remaining on the sloped surface and is prevented from being unable to be placed on the positioning pin base 21 when the glass slide transport device 200 places the glass slide 30 on the stage 20.

In the operation of placing the glass slide 30, the glass slide 30 is intended to be placed in a region surrounded by the positioning pins fixed to the stage 20. For example, in FIG. 13, when the glass slide 30 rides on the sloped surface, the glass slide 30 slides on the sloped surface and moves to a right side of the positioning pin 22. Therefore, when the side surface of the glass slide 30 is displaced within a range of a width W of the sloped surface, the glass slide 30 can be placed in the region surrounded by the positioning pins 22. That is, the width W of the sloped surface serves as a margin when the glass slide 30 is placed.

Here, when the angle between the bottom surface 22a and the side surface 22c is set to 60 degrees or less, the width W of the sloped surface serving as a margin when the glass slide 30 is placed can be increased. In the glass slide loading unit 11, the glass slide storage unit 12, the glass slide loading line 14, and the glass slide storage line 15, the stage 20 are moved in the horizontal direction in a state in which the glass slide 30 is placed on the stage 20. Therefore, for example, when the glass slide 30 on which the liquid is placed is moved in the horizontal direction, the glass slide 30 may be moved by an inertial force and pressed against the positioning pin 22. In this regard, by setting the angle between the bottom surface 22a and the side surface 22c to 60 degrees or less, it is possible to avoid the outflow of the reagent caused by the buffer solution adhering to the side surface or the lower surface of the glass slide 30 flowing around to the upper surface of the glass slide 30 when the glass slide 30 is pressed against the positioning pin 22.

### <Gripping Operation and Placement Operation for Glass Slide>

The glass slide transport device 200 according to the present embodiment is configured as described above, and hereinafter, a gripping operation and a placement operation for the glass slide 30 in which the glass slide transport device 200 is used will be described.

FIG. 17 is a diagram illustrating a state in which an operation of gripping the glass slide 30 with the finger portion 3A and the finger portion 3B is started. In FIG. 17, in a state in which the finger portion 3A and the finger portion 3B are open, the support portion 4A and the support portion 4B are both positioned higher than the upper surface of the glass slide 30. Here, a distance between a distal end of the support portion 4A and a distal end of the support portion 4B facing each other is at least equal to or larger than a distance between the two side surfaces of the glass slide 30 to be gripped. Accordingly, the finger portion 3A and the finger portion 3B can be moved in the up-down direction without being in contact with the glass slide 30. A placement state of the finger portion 3A and the finger portion 3B in the left-right direction illustrated in FIG. 17 is defined as an "open state". Therefore, the state illustrated in FIG. 17 can be said to be an "open state" and a state in which the support portion 4A and the support portion 4B are at positions higher than the upper surface of the glass slide 30.

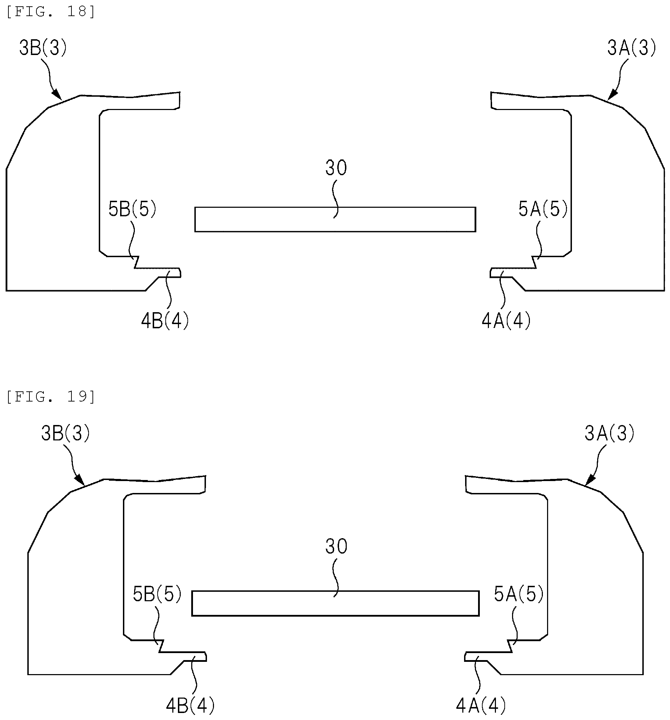

Next, FIG. 18 is a diagram illustrating a state in which the finger portion 3A and the finger portion 3B are lowered while maintaining the "open state" illustrated in FIG. 17. The state illustrated in FIG. 18 can be said to be a state in which the finger portion 3A and the finger portion 3B are in the "open state" and the support portion 4A and the support portion 4B are at positions lower than the lower surface of the glass slide 30.

Next, FIG. 19 is a diagram illustrating a state in which a distance between the support portion 4A and the support portion 4B is reduced from the state illustrated in FIG. 18. In FIG. 19, the distance between the support portion 4A and the support portion 4B is smaller than a distance between the two side surfaces of the glass slide 30 to be gripped, and a distance between the pointed head portion 5A and the pointed head portion 5B is larger than the distance between the two side surfaces of the glass slide 30 to be gripped. A placement state of the finger portion 3A and the finger portion 3B in the left-right direction illustrated in FIG. 19 is defined as a "half-closed state". Therefore, the state illustrated in FIG. 19 can be said to be a state in which the finger portion 3A and the finger portion 3B are in the "half-closed state" and the support portion 4A and the support portion 4B are at positions lower than the lower surface of the glass slide 30.

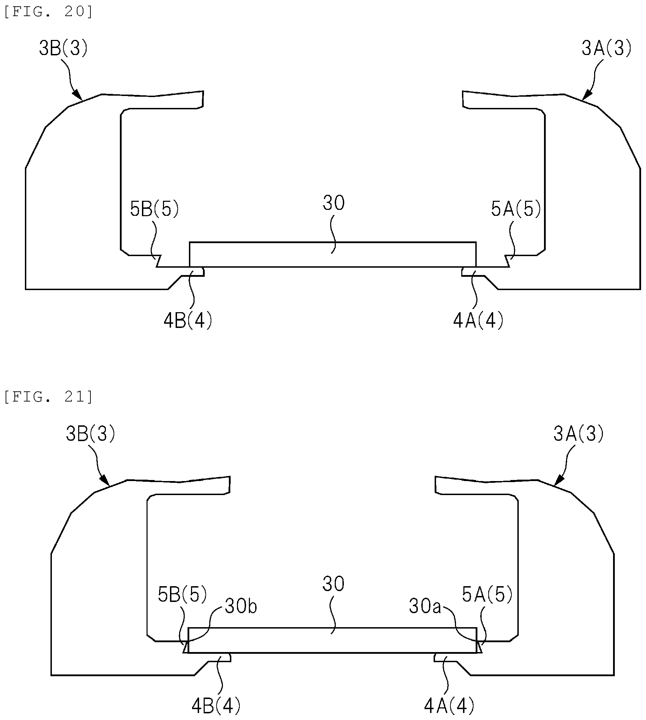

Next, FIG. 20 is a diagram illustrating a state in which the finger portion 3A and the finger portion 3B are raised by a predetermined distance from the state illustrated in FIG. 19. In FIG. 20, a part of the lower surface of the glass slide 30 is supported by the support portion 4A and the support portion 4B. Therefore, the state illustrated in FIG. 20 can be said to be a state in which the finger portion 3A and the finger portion 3B are in the "half-closed state" and the support portion 4A and the support portion 4B each are in contact with a part of the lower surface of the glass slide 30 to support the glass slide 30.

Next, FIG. 21 is a diagram illustrating a state in which the distance between the support portion 4A and the support portion 4B is further reduced from the state illustrated in FIG. 20. In FIG. 21, the distance between the support portion 4A and the support portion 4B is smaller than the distance between the two side surfaces of the glass slide 30 to be gripped, and the distance between the pointed head portion 5A and the pointed head portion 5B is equal to the distance between the two side surfaces of the glass slide 30 to be gripped. That is, the state illustrated in FIG. 21 can be said to be a state in which a part of the lower surface of the glass slide 30 is supported by each of the support portion 4A and the support portion 4B, the pointed head portion 5A is pressed against the gripping point 30a on the side surface of the glass slide 30, and the pointed head portion 5B is pressed against the gripping point 30b on the side surface of the glass slide 30. That is, the state illustrated in FIG. 21 can be said to be a state in which the glass slide 30 is gripped by the pointed head portion 5A and the pointed head portion 5B while the glass slide 30 is supported by the support portion 4A and the support portion 4B. A placement state of the finger portion 3A and the finger portion 3B in the left-right direction illustrated in FIG. 21 is defined as a "closed state".

When the finger portion 3A and the finger portion 3B are raised while maintaining the "closed state", the glass slide 30 can be gripped and transported in a stable state.

As described above, the operation of gripping the glass slide 30 using the glass slide transport device 200 can be performed. That is, the operation of gripping the glass slide 30 can be performed by operating the finger portion 3A and the finger portion 3B in an order illustrated in FIGS. 17 to 21. On the other hand, the operation of placing the glass slide 30 can be performed by operating the finger portion 3A and the finger portion 3B in a reverse order illustrated in FIGS. 21 to 17.

Further, the gripping operation and the placement operation will be described in detail.

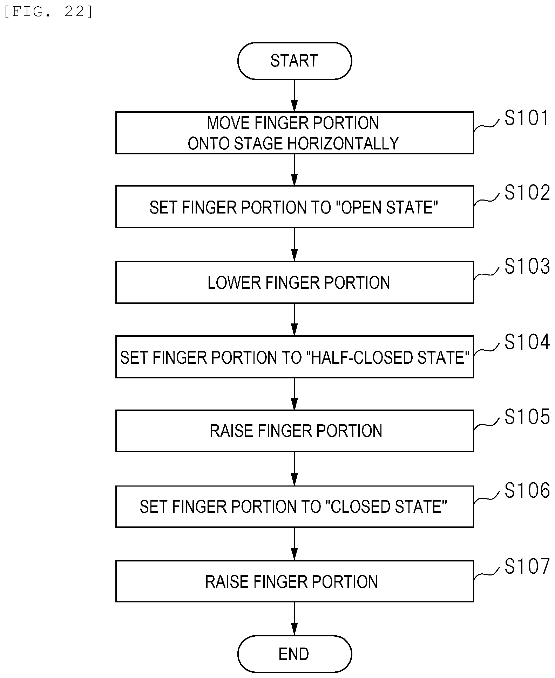

FIG. 22 is a flowchart illustrating an operation of gripping the glass slide 30.

First, the control unit CU horizontally moves the finger portion 3A and the finger portion 3B onto the stage 20 (S101). Next, the control unit CU sets the placement state of the finger portion 3A and the finger portion 3B to the "open state" (see FIG. 17). That is, the control unit CU controls a distance between the finger portion 3A and the finger portion 3B to be larger than a length of the glass slide 30 in a long-side direction (S102).

Subsequently, the control unit CU controls the finger portion 3A and the finger portion 3B to be lowered while maintaining the "open state" to move the support portion 4A and the support portion 4B to positions lower than the lower surface of the glass slide 30 (see FIG. 18) (S103).

Thereafter, the control unit CU controls the distance between the finger portion 3A and the finger portion 3B to be smaller than the length of the glass slide 30 in the long-side direction in a state in which the support portion 4A and the support portion 4B are placed at positions lower than the lower surface of the glass slide 30 (S104). That is, the control unit CU sets the finger portion 3A and the finger portion 3B to the "half-closed state" (see FIG. 19).

Next, the control unit CU controls the finger portion 3A and the finger portion 3B to be raised to bring the support portion 4A and the support portion 4B into contact with a part of the lower surface of the glass slide 30 in a state in which the distance between the finger portion 3A and the finger portion 3B is smaller than the length of the glass slide 30 in the long-side direction (S105). That is, the control unit CU causes the support portion 4A and the support portion 4B to support the glass slide 30 by raising the finger portion 3A and the finger portion 3B while maintaining the "half-closed state" (see FIG. 20). With this operation, the glass slide 30 is separated from the stage 20.

At this time, for example, a speed at which the finger portion 3A and the finger portion 3B are raised with respect to the stage 20 is preferably less than 4 mm/s. For example, when the stage 20 includes the heater block 23, a liquid enters a gap between the glass slide 30 and the heater block 23, and the glass slide 30 adheres to the heater block 23 due to the liquid. As a result, when the glass slide 30 is lifted up by the finger portion 3A and the finger portion 3B, the glass slide 30 may suddenly jump up. In this regard, when the speed at which the finger portion 3A and the finger portion 3B are raised with respect to the stage 20 is less than 4 mm/s, the sudden jumping up of the glass slide 30 can be prevented.

The glass slide 30 is raised by 0.3 mm or more and 3 mm or less from the state in which the glass slide 30 is placed on the stage 20. This is because the glass slide 30 is only supported by the support portion 4A and the support portion 4B during this operation, and the glass slide 30 may be displaced in the horizontal direction due to vibration caused by operating glass slide transport device 200. In this regard, the lifting distance of the glass slide 30 in the ungripped state can be shortened by limiting the amount of rise of glass slide 30 to the range of 0.3 mm or more and 3 mm or less. As a result, the glass slide 30 can be prevented from being displaced in the horizontal direction due to vibration.

Subsequently, the control unit CU performs control to further reduce the distance between the finger portion 3A and the finger portion 3B to bring the pointed head portion 5A into contact with the gripping point 30a present on the first side surface of the glass slide 30 and bring the pointed head portion 5B into contact with the gripping point 30b present on the second side surface of the glass slide 30 in a state in which the support portion 4A and the support portion 4B are in contact with a part of the lower surface of the glass slide 30 (S106). That is, the control unit CU sets the finger portion 3A and the finger portion 3B to the "closed state" (see FIG. 21).

Finally, the control unit CU performs control to raise the finger portion 3A and the finger portion 3B with respect to the stage 20 to a height at which the glass slide 30 is moved in the horizontal direction (S107). As described above, the glass slide 30 placed on the stage 20 can be gripped by the finger portion 3A and the finger portion 3B provided in the glass slide transport device 200. In particular, by using the finger portion 3A and the finger portion 3B in the present embodiment, the glass slide 30 can be gripped while being kept horizontal, and as a result, the glass slide 30 can be transported without causing the liquid placed on the glass slide 30 to flow out.

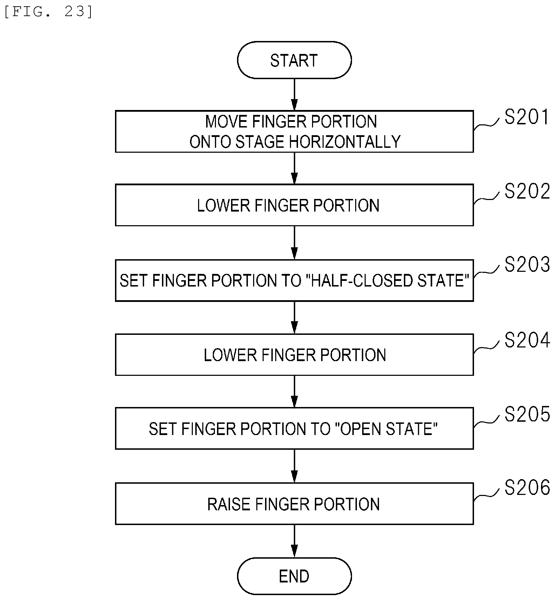

FIG. 23 is a flowchart illustrating an operation of placing the glass slide 30. The glass slide 30 is in a state of being held by the finger portion 3A and the finger portion 3B.

The control unit CU controls the finger portion 3A and the finger portion 3B to move horizontally to the stage 20 on which the glass slide 30 is placed (S201). Next, the control unit CU controls the finger portion 3A and the finger portion 3B to be lowered to a vicinity of the stage 20 (S202). Subsequently, the control unit CU controls the finger portion 3A and the finger portion 3B, thereby bringing the glass slide 30 into a state in which the finger portion 3A and the finger portion 3B are in the "half-closed state" as illustrated in FIG. 20 and a part of the lower surface of the glass slide 30 is supported by the support portion 4A and the support portion 4B (S203).

Thereafter, the control unit CU controls the finger portion 3A and the finger portion 3B to be lowered until the glass slide 30 is placed on the stage 20 (S204). At this time, the positional relationship between the glass slide 30 and the finger portion 3A and the finger portion 3B is as illustrated in FIG. 19. Next, as illustrated in FIG. 18, the control unit CU sets the finger portion 3A and the finger portion 3B to the "open state" (S205). Subsequently, the control unit CU controls the finger portion 3A and the finger portion 3B to be raised (S206) . The positional relationship between the glass slide 30 and the finger portion 3A and the finger portion 3B is as illustrated in FIG. 17.

As described above, the glass slide 30 can be placed on the stage 20 by using the finger portion 3A and the finger portion 3B provided in the glass slide transport device 200. In particular, by using the finger portion 3A and the finger portion 3B in the present embodiment, the glass slide 30 can be gripped while being kept horizontal, and as a result, the glass slide 30 can be transported without causing the liquid placed on the glass slide 30 to flow out.

When the finger portion 3A and the finger portion 3B are lowered to the vicinity of the stage 20, the lower surface of the glass slide 30 gripped by the finger portion 3A and the finger portion 3B is lowered to a position lower than the top surface 22b of the positioning pin 22 and higher than the surface of the stage 20 on which the glass slide 30 is placed. The surface of the stage 20 on which the glass slide 30 is placed is an upper surface of the positioning pin base 21 when the stage 20 does not include the heater block 23, and is an upper surface of the heater block 23 when the stage 20 includes the heater block 23. Here, when the finger portion 3A and the finger portion 3B are in the "open state", the glass slide 30 may be pulled by the support portion 4A and the support portion 4B, and the glass slide 30 may be displaced in the horizontal direction. In this regard, in the present embodiment, the finger portion 3A and the finger portion 3B are brought into the "open state" after being lowered to the above-described height (to a position where the lower surface of the glass slide 30 is lower than the top surface 22b of the positioning pin 22 and higher than the surface of the stage 20 on which the glass slide 30 is placed). Therefore, even if the glass slide 30 is displaced in the horizontal direction, the glass slide 30 slides on the sloped surface of the positioning pin 22, so that the glass slide 30 can be accommodated and placed at a predetermined position of the stage 20.

Between the gripping operation and the placement operation of the glass slide 30, there is a horizontal movement operation, and the glass slide transport device 200 is configured to move the glass slide 30 in the up-down direction or the horizontal direction (see FIG. 3). The movement in the horizontal direction includes movement or rotational movement of the glass slide 30 in the long-side direction or the short-side direction. In the glass slide transport device 200 according to the present embodiment, the finger portion 3A and the finger portion 3B can be moved to positions where a plurality of different stages 20 are disposed by moving the finger portion 3A and the finger portion 3B in the up-down direction or the horizontal direction by the drive unit 2.

### <Modification 3>

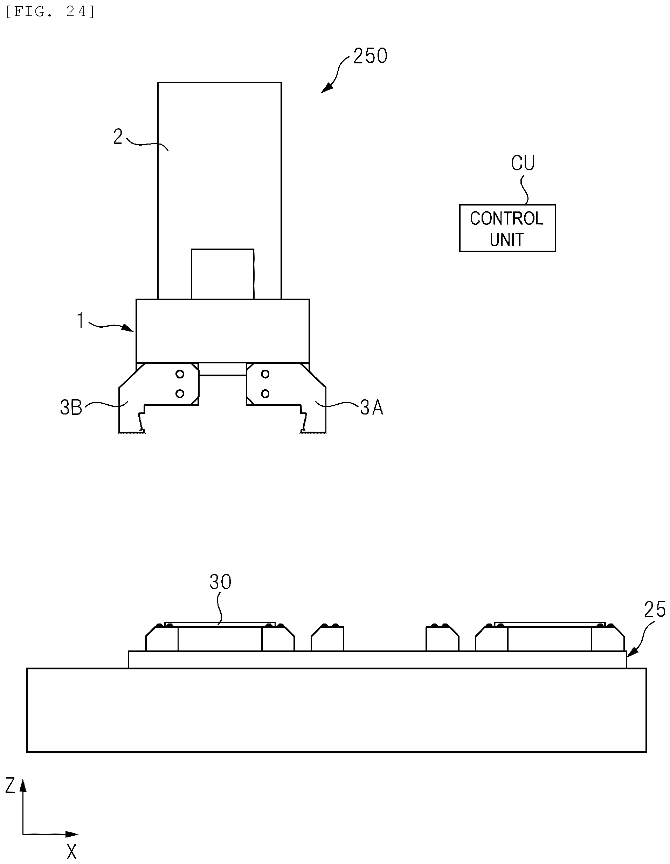

FIG. 24 is a diagram illustrating configurations of a glass slide transport device 250 and a stage 25 in Modification 3. As illustrated in FIG. 24, the glass slide transport device 250 includes the gripping portion 1 and the drive unit 2 that moves the gripping portion 1 in a Z transport shaft direction (downward direction), and the gripping portion 1 includes the finger portion 3A and the finger portion 3B. On the other hand, the stage 25 has a plurality of placement positions movable in the X transport shaft direction (lateral direction), and is configured such that the glass slide 30 can be placed at each of the plurality of placement positions. The glass slide transport device 250 and the stage 25 are connected to the control unit CU. The connection unit CU is configured to control the operation of gripping/releasing the glass slide 30 by the gripping portion 1, an operation of moving the gripping portion 1, and an operation of moving the placement position on the stage 25.

The configuration of the gripping portion 1 is the same as that of the embodiment. Further, the stage 25 may not only be configured to have a plurality of placement positions as illustrated in FIG. 24, but may also be configured with an assembly of a plurality of individual stages, in which the stages 25 are disposed along the X transport shaft direction.

In Modification 3, the finger portion 3A and the finger 3B can also grip or place the glass slide 30 placed on the stage 25 by the same operation flow as in the embodiment. However, in Modification 3, the glass slide 30 is transported to different placement positions on the stage 25 by the movement of the gripping portion 1 in the up-down direction, the movement of the stage 25 in the horizontal direction, and the operation of opening and closing the finger portion 3A and the finger portion 3B.

In Modification 3, the stage 25 has different placement positions movable in the X transport shaft direction, and therefore, the glass slide transport device 250 can transport the glass slide 30 to different placement positions of the stage 25 without moving the glass slide 30 in the horizontal direction in a state of gripping the glass slide 30.

Although the invention made by the present inventors has been specifically described based on the embodiment, the invention is not limited to the embodiment, and it is needless to say that various modifications can be made without departing from the gist of the invention.

For example, although the embodiment has been described with an example in which the side surface of the glass slide 30 on a short side is gripped, the technical idea of the embodiment is not limited thereto, and a configuration in which the side surface of the glass slide 30 on a long side is gripped may be adopted.

### Reference Signs List

1 gripping portion
1a finger drive unit
2 drive unit
2a Z transport shaft
2b X transport shaft
2c Y transport shaft
3 finger portion
3A finger portion
3B finger portion
4 support portion
4A support portion
4B support portion
4a support surface
5 pointed head portion
5A pointed head portion
5B pointed head portion
5X pointed head portion
5Y pointed head portion
5a second surface
6a first surface
10 staining unit
10A staining unit
10B staining unit
11 glass slide loading unit
12 glass slide storage unit
13 sampler unit
14 glass slide loading line
15 glass slide storage line
20 stage
20A stage
20B stage
20C stage
20D stage
20E stage
20F stage
21 positioning pin base
22 positioning pin
22a bottom surface
22b top surface
22c side surface
23 heater block
25 stage
30 glass slide
30a gripping point
100 sample processing system
200 glass slide transport device
200A glass slide transport device
200B glass slide transport device
200C glass slide transport device
250 glass slide transport device
CU control unit

## Claims

1. A glass slide transport device that transports a glass slide, the glass slide transport device comprising:
a gripping portion configured to grip and release the glass slide; and
a drive unit configured to move the gripping portion, wherein
the gripping portion includes
at least three or more finger portions, and
a finger drive unit configured to operate the plurality of finger portions, and
each of the plurality of finger portions includes
a support portion configured to support a part of a lower surface of the glass slide, and
a pointed head portion configured to come into contact with a gripping point, the gripping point being provided on a side surface of the glass slide at a position below an upper surface of the glass slide.

2. The glass slide transport device according to claim 1, wherein
a distance from the upper surface of the glass slide to the gripping point on the side surface is 0.5 mm or more.

3. The glass slide transport device according to claim 1, wherein
each of the plurality of finger portions includes
a first surface connecting the support portion and the pointed head portion, and
a second surface including the pointed head portion and intersecting the first surface.

4. The glass slide transport device according to claim 3, wherein
an angle between the side surface of the glass slide and the second surface is 90 degrees or more.

5. The glass slide transport device according to claim 3, wherein
an angle between the side surface of the glass slide and the first surface is 10 degrees or more.

6. The glass slide transport device according to claim 1, wherein
when a horizontal direction parallel to the side surface including the gripping point is defined as a width direction,
a length of the pointed head portion in the width direction is 2 mm or less.

7. The glass slide transport device according to claim 1, further comprising:
a control unit configured to control the finger drive unit, wherein
when attention is paid to a first finger portion and a second finger portion as a pair,
the control unit
controls a distance between the first finger portion and the second finger portion to be larger than a length of the glass slide in a long-side direction,
controls the support portion of the first finger portion and the support portion of the second finger portion to move to positions lower than the glass slide while maintaining a state in which the distance between the first finger portion and the second finger portion is larger than the length of the glass slide in the long-side direction,
controls the distance between the first finger portion and the second finger portion to be smaller than the length of the glass slide in the long-side direction in a state in which the support portion of the first finger portion and the support portion of the second finger portion are located at the positions lower than the glass slide,
controls the first finger portion and the second finger portion to be raised to bring the support portion of the first finger portion and the support portion of the second finger portion into contact with a part of the lower surface of the glass slide in a state in which the distance between the first finger portion and the second finger portion is smaller than the length of the glass slide in the long-side direction, and
controls the distance between the first finger portion and the second finger portion to be further reduced to bring the pointed head portion of the first finger portion into contact with the gripping point present in a first side surface of the glass slide and bring the pointed head portion of the second finger portion into contact with the gripping point present in a second side surface of the glass slide in a state in which the support portion of the first finger portion and the support portion of the second finger portion are in contact with a part of the lower surface of the glass slide.

8. The glass slide transport device according to claim 7, wherein
in a state in which the distance between the first finger portion and the second finger portion is smaller than the length of the glass slide in the long-side direction, the finger drive unit controls the first finger portion and the second finger portion to be raised at a rising speed of less than 4 mm/s to bring the support portion of the first finger portion and the support portion of the second finger portion into contact with a part of the lower surface of the glass slide.

9. A glass slide transport device comprising:
a stage on which a glass slide is to be placed, wherein
the stage includes a positioning pin by which a position of the glass slide is fixed,
the positioning pin includes, in a cross-sectional view,
a bottom surface,
a top surface facing the bottom surface, and
a side surface intersecting the bottom surface and the top surface, and
a distance in a height direction from an upper surface of the glass slide to the top surface of the positioning pin is 0.5 mm or more.

10. The glass slide transport device according to claim 9, wherein
the side surface is a sloped surface.

11. The glass slide transport device according to claim 10, wherein
an angle between the bottom surface and the side surface is 30 degrees or more and 60 degrees or less.
